# EUROPEAN PATENT APPLICATION

(11) **EP 2 555 401 A1**
(43) Date of publication of application: **06.02.2013**
(21) Application number: 11762910.5
(22) Date of filing: 31.03.2011
(51) Int. Cl.: H02M 3/155

(54) **POWER CONVERSION CIRCUIT CONTROL DEVICE**

(30) Priority: 31.03.2010 JP 2010084702
(71) Applicant: Nagasaki University, National University Corporation, Nagasaki-shi Nagasaki 852-8521 (JP)
(72) Inventor: KUROKAWA Fujio, Nagasaki-shi Nagasaki 852-8521 (JP)
(74) Representative: Viering, Jentschura & Partner
(86) International application number: PCT/JP2011/058367
(87) International publication number: WO 2011/122686

(57) **Abstract**

It provides the effective power conversion control technique which it can control which it made use of a characteristic (nature) of each A/D converter in. It comprises the third control part including the third operating circuit it inputs signal from third A/D converter inputting the detecting signal which is different from the detecting signal which is the same as the detecting signal or the detecting signal and above third A/D converter, and to generate the third operating signal, and the above actuating management circuit manages the actuating of an above first control part and the second above control part and the third above control part.

## Description

### FIELD OF THE INVENTION

The present invention relates to a control device of a power inverter circuit generating ON/OFF control signal for electric switch for power conversion. The ON/OFF control signal is generated based on detecting signals such as output voltage, output current, electric switch current, and so on. Using characteristic (special quality) of each A/D converter, efficient control can be performed.

### TECHNICAL BACKGROUND

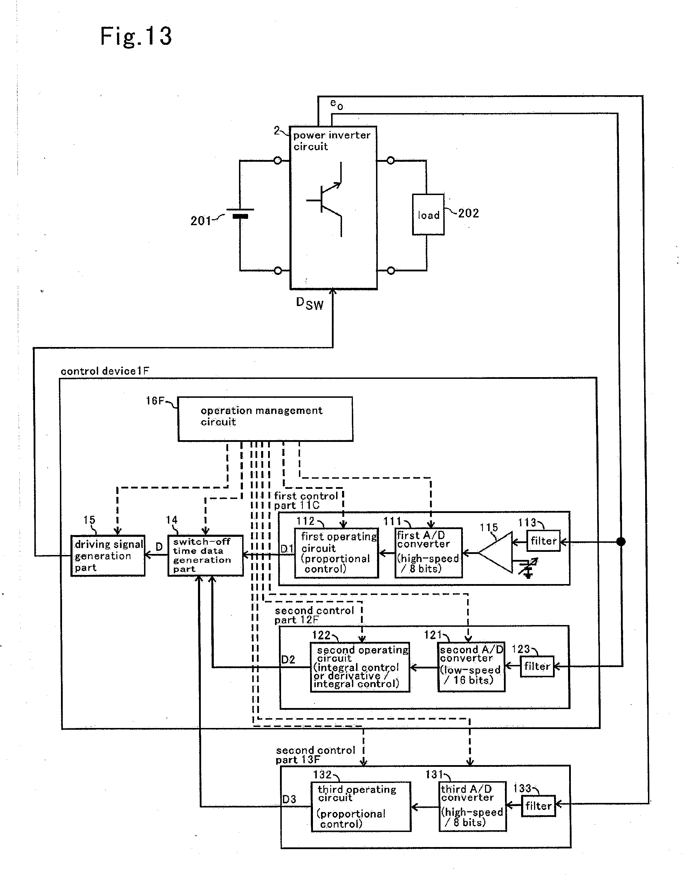

In a control device of the power inverter circuit, detection signals such as output voltage, output current, switch current, etc. are used for calculating a plurality of control elements. FIG. 13 shows power conversion system. In this power conversion system, output voltage eₒ of power inverter circuit 9 is detected. And control device 8 drives an electric switch for power conversion of power inverter circuit 9 (cf. patent document 1).

Control device 8 converts analog output voltage eo into digital voltage value E _ OUT by A/D converter 81. And control device 8 sends out digital voltage value E _ OUT to proportional control element 8211 and sends out to derivative / integral control element 8212.

Calculation a result of an operation (output signal D1) of proportional control element 8211 is sent to adder 822 of the subsequent stage. Also, a result of an operation (output signal D2) of derivative / integral control element 8212 is sent to adder 822 of the subsequent stage, too. Adder 822 outputs an addition result (output signal D) to driving signal generation part 83 of the subsequent stage by an operation cycle of proportional control element 8211.

As a preceding patent document, PCT/JP2009/053773 exists.

### SUMMARY OF THE INVENTION

Alternatively, generally the sampling rate goes low as resolution becomes higher in the A/D converter. On the contrary, resolution deteriorates as sampling rate becomes higher in the A/D converter.

If sampling rate of A/D converter 81 becomes higher, in control device 8 of FIG. 13, a response of proportional control element 8211 becomes high-speed. Then resolution of A/D converter 81 deteriorates. As a result, accuracy of differentiation / integral control element 8212 worsens.

On the contrary, by raising resolution of A/D converter 81 accuracy of differentiation /integral control element 8212. can raise. Then sampling rate deteriorates, and, as a result, response of proportional control element 8211 falls off.

An object of the present invention is to provide a control device which controls effectively a power inverter circuit by using the characteristic of each A/D converter. The object of the present invention is to provide a control device which controls the power inverter circuit that performs A/D conversion of a sameness detection signal by A/D converter of "high resolution / low sampling rate" and by A/D converter of "low resolution / high sampling rate".

### MEANS TO SOLVE THE PROBLEM

In a stationary state, quantization accuracy of the A/D translate circuit may be low, however time resolution of A/D translate circuit has to be high. In a transient state, quantization accuracy of the A/D translate circuit has to be high, however time resolution of A/D translate circuit may be low. The inventor looked at these facts. When a certain arithmetic is performed about a certain data, a part of data is calculated with a low bit (e.g., resolution 8 bit). And another parts are calculated with a high bit (e.g., resolution 16-bit). That is, A/D converter of high-speed low bit (e.g., 8 bit) and A/D converter of a low-speed high bit (e.g., 16-bit) are used. High-speed high bit A/D converter does not have to use by carrying out this invention.The control device of the power inverter circuit like time using the A/D converter of the high-speed high binary digit is provided by the present invention. The power inverter circuit of the present invention assumes (1)-(6) claims.

(1)
   A control device of power inverter circuit which generates switch operating time data based on at least one detecting signal among output voltage, output current, input voltage, input current, electric switch current and electric reactor current, and generates ON/OFF control signal for power conversion switch based on the switch operating time data, comprising: first control part including
   first operation circuit which includes
   first A/D converter that inputs the detecting signal and performs A/D conversion and
   first operation circuit that generates first operation signal by inputting digital signal from the first A/D converter,
   second operation circuit which includes
   second A/D converter that inputs the detecting signal and performs A/D conversion and
   second operation circuit that generates second operation signal by inputting digital signal from the first A/D converter,
   switch operating time data generation part which generates the switch operating time data,
   operation management circuit which manages first control section, second control section and switch operating time data generation part,
   wherein
   (a) the first A/D converter and the second A/D converter have next relations,
      [sampling rate of the first A/D converter]
      > [sampling rate of the second A/D converter],
      [resolution of the first A/D converter]
      < [resolution of the second A/D converter],
   (b) the first operation circuit and the second operating circuit have next relations, [unit operating time of the first operation circuit]
      < [unit operating time of the second operation circuit]
      unit operating time: time required for each operating circuit generating one result of an operation
   (c) the first operation circuit inputs a digital signal from the first A/D converter and generates first operating signal,
      the second operating circuit inputs a digital signal from the second A/D converter and generates second operating signal,
      the switch operating time data generation part synthesizes the first operating signal and the second operating signal and generates the switch operating time data of the switch for power conversion.

(2)
   The control device of the power inverter circuit according to (1),
   even more particularly, the control device has
   third A/D converter which inputs a detecting signal same as the detecting signal or a detecting signal not same as the detecting signal,
   third control part which includes third operating circuit that inputs signal from the third A/D converter and generates third operation signal, wherein
   (a) the actuating management circuit manages operations of the first control section, the second control section and the first control section,
   (b)the first A/D converter, the second A/D converter and the third A/D converter have next relations,
      [sampling rate of the first A/D converter]
      > [sampling rate of the second A/D converter]
      >= [sampling rate of the third A/D converter],
      or,
      [sampling rate of the first A/D converter]
      > [sampling rate of the third A/D converter]
      >= [sampling rate of the second A/D converter],
      and,
      [resolution of the first A/D converter]
      < [resolution of the second A/D converter]
      <= [resolution of the third A/D converter],
      or,
      [resolution of the first A/D converter]
      < [resolution of the third A/D converter]
      <= [resolution of the second A/D converter],
   (c) the first operation circuit inputs digital signal from the first A/D converter and generates the first operating signal,
   (d) the second operating circuit inputs digital signal from the second A/D converter and generates the second operating signal,
   (e) the third operating circuit inputs digital signal from the third A/D converter and generates the third operating signal,
   (f) the first operation circuit, the second operating circuit and the third operating circuit have next relations,
      [unit operating time of the first operation circuit]
      < [unit operating time of the second operation circuit]
      <= [unit operating time of the third operation circuit],
      or,
      [unit operating time of the first operation circuit]
      < [unit operating time of the third operation circuit]
      <= [unit operating time of the second operation circuit], (g) the switch operating time data generation part synthesizes the first operating signal and the second operating signal and the third operating signal and generates above switch operating time data of the switch for power conversion.

(3)
   The control device of the power inverter circuit according to (1)-(2) ,wherein just before the first A/D converter, the second A/D converter and the third A/D converter, a filter is comprised.

(4)
   The control device of the power inverter circuit according to claim (1)-(3), wherein just before the first A/D converter, the second A/D converter and the third A/D converter an amplifier is comprises respectively, the amplifier clips predetermined range width and amplifies.

(5)
   The control device of the power inverter circuit according to claim (1)-(4), wherein calculation number of times of the first operation circuit by one ON/OFF period of the switch for power conversion is more than the calculation number of times of the second operating circuit.

(6)
   The control device of the power inverter circuit according to claim 1-4, wherein calculation number of times of the first operation circuit by one ON/OFF period of the switch for power conversion is more than the calculation number of times of the second operating circuit, and calculation result of the first operation circuit is updated at least one time in one ON/OFF period of the switch for power conversion.

### EFFECT OF THE INVENTION

In the present invention, A/D converters of "high resolution / low sampling rate" and "low resolution / high sampling rate" are used. If the output of the power inverter circuit changes dynamically, the arithmetic by the control part of "low resolution / high sampling rate" occupies larger ratio. When the output of the power inverter circuit changes little or a little, the arithmetic by the control part of "high resolution / low sampling rate" occupies larger ratio.

According to the present invention, A/D converter used for control section of "high resolution / low sampling rate" and A/D converter used for control section of "low resolution / high sampling rate" are low cost.
Therefore, production cost of the control device can become lower.

Specifically, a price of A/D converter 8 bits or less is low. A price of A/D converter of greater than 8 bit suddenly becomes higher. Low-speed A/D converter of greater than 8 bit can be manufactured, for example, by combination of a plurality of A/D converter 8 bits or less.

When output voltage changed dynamically, the stability of the output voltage of the control device of the present invention is high. Therefore, as an output capacitor of the power inverter circuits, a capacitor of the small capacity can be adopted. As a result, a small power inverter circuit can be made.

For example, the total level of power consumption of the high-speed 8 bit A/D converter and the power consumption of the low-speed 16-bit A/D converter is small at all than power consumption of the high-speed 16-bit A/D converter. For example, the magnification is around 0.1 times. The recent electronic devices may repeat a sleep mode and an active mode every several minutes from dozens of seconds. Thus, the control device of the present invention is suitable for the power supply of such electronic devices.

### BRIEF DESCRIPTION OF DRAWINGS

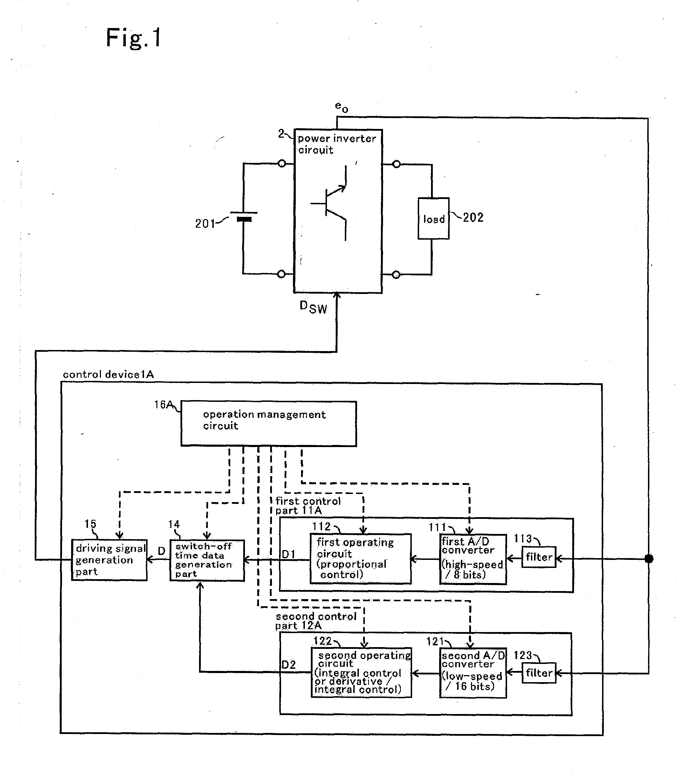

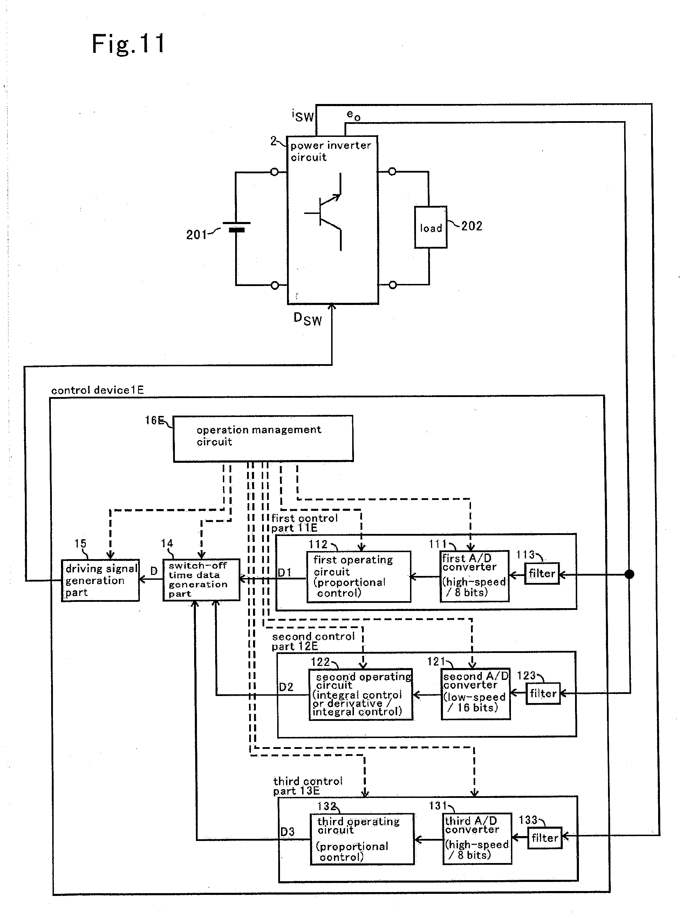

[FIG. 11 FIG. 1 is explanatory drawing showing an embodiments of a control device of a power inverter circuits of the present invention performing armature voltage control.
[FIG. 2] FIG. 2 is explanatory drawing showing a specific circuit diagram used for the embodiments of FIG. 1.
[FIG. 3] FIG. 3 (A) is a figure showing the states that an output signal of the first operation circuit and the output signal of the second operating circuit are added to by a computing unit. FIG. 3 (B) is a figure showing specific arithmetic.
[FIG. 4] FIG. 4 is a figure showing the examples that calculation number of times of the first operation circuit is the same as the calculation number of times of the second operating circuit. The calculation number of times is defined about one "ON/OFF period" of the electric switch for power conversion.
[FIG. 5] FIG. 5 is a figure showing the a lot of example than the calculation number of times of the second operating circuit with calculation number of times of the first operation circuit per 1 ON/OFF period of the switch for power conversion.
[FIG. 6] FIG. 6 is a figure which shows the embodiment that an amplifier was placed in former clause of the first A/D converter.
   The resolution for some data stream is high.
[FIG. 7] FIG. 7 is operation explanatory drawing of the circuit of FIG. 6.

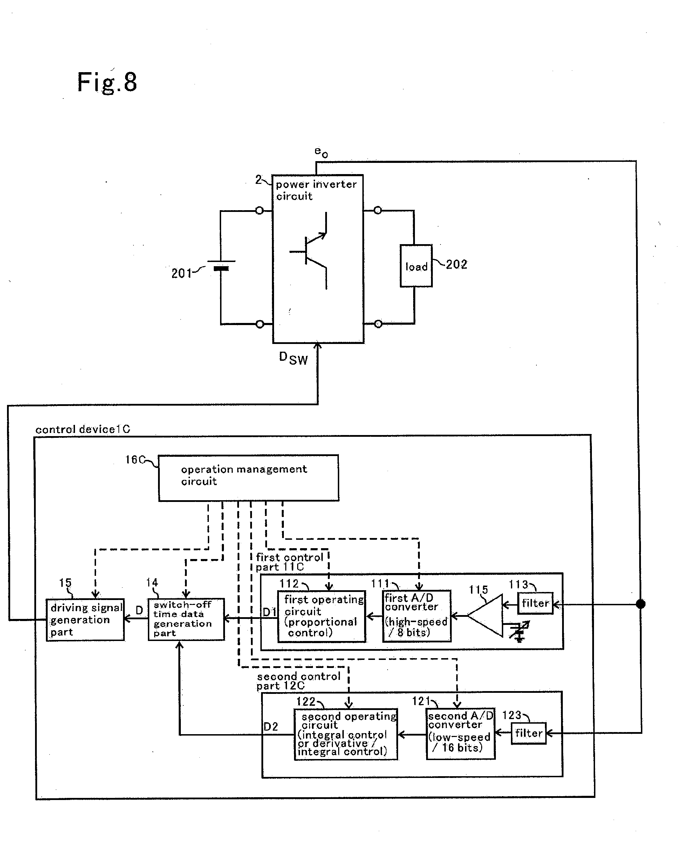

[FIG. 8] FIG. 8 is operation explanatory drawing of the circuit of FIG. 6, too.

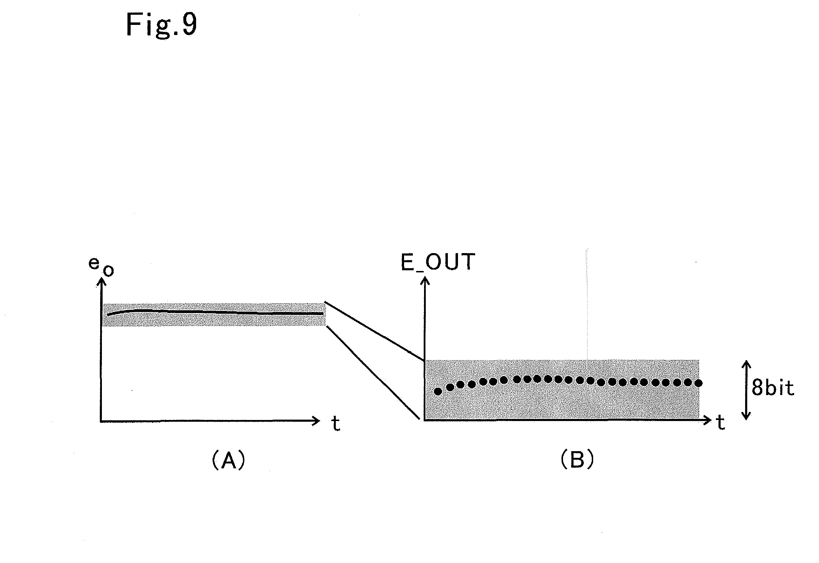

[FIG. 9] FIG. 9 is an illustration which shows third embodiment of the present invention.
[FIG. 10] FIG. 10 is an illustration which shows a specific circuit diagram used for the third embodiment of FIG. 9.
[FIG. 11] FIG. 11 is an illustration which shows fourth embodiment of the present invention.

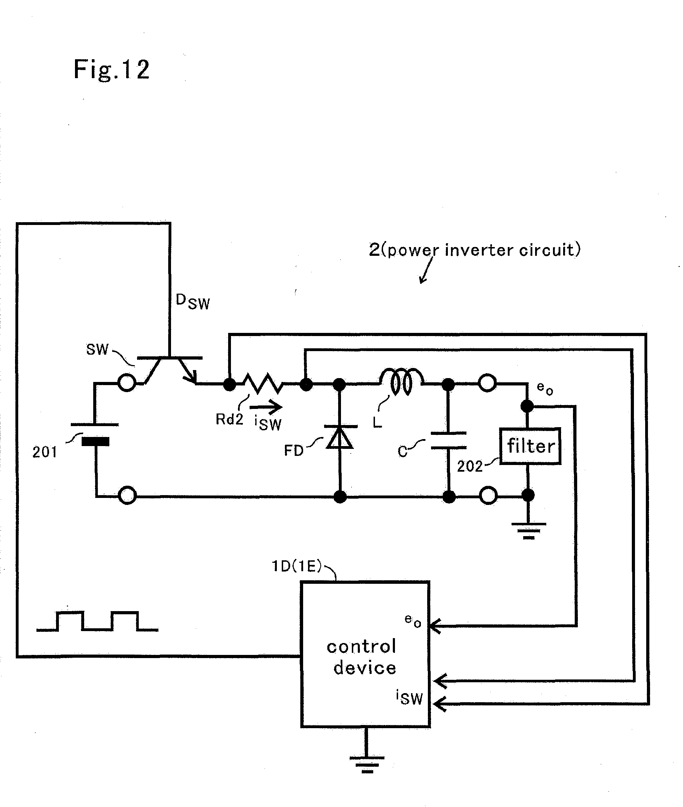

[FIG. 12] FIG. 12 is an illustration which shows the fifth embodiment of the present invention.
[FIG. 13] FIG. 13 is an illustration which shows the variation of the fifth embodiment of the present invention.
[FIG. 14] FIG. 14 is an illustration which shows the fifth embodiment of the present invention.
[FIG. 15] FIG. 15 is an illustration which shows a control example of the present invention.

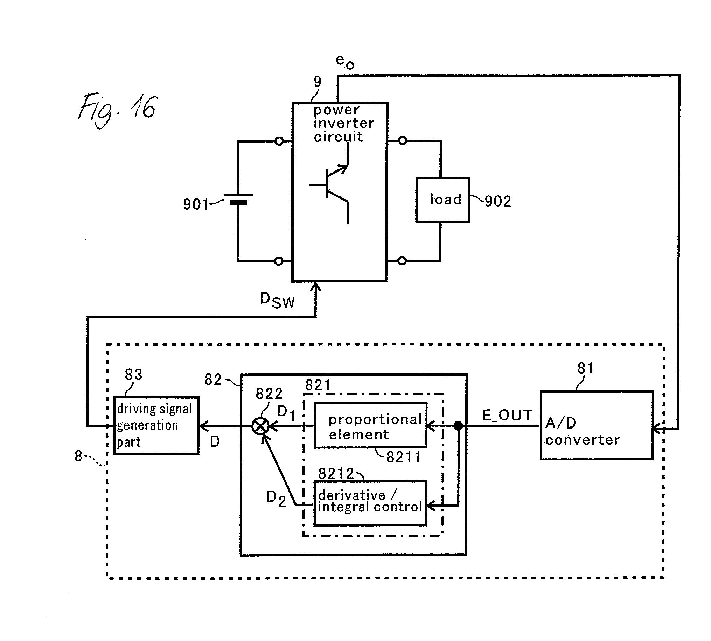

[FIG. 16] FIG. 16 is an illustration which shows an other control example of the present invention.

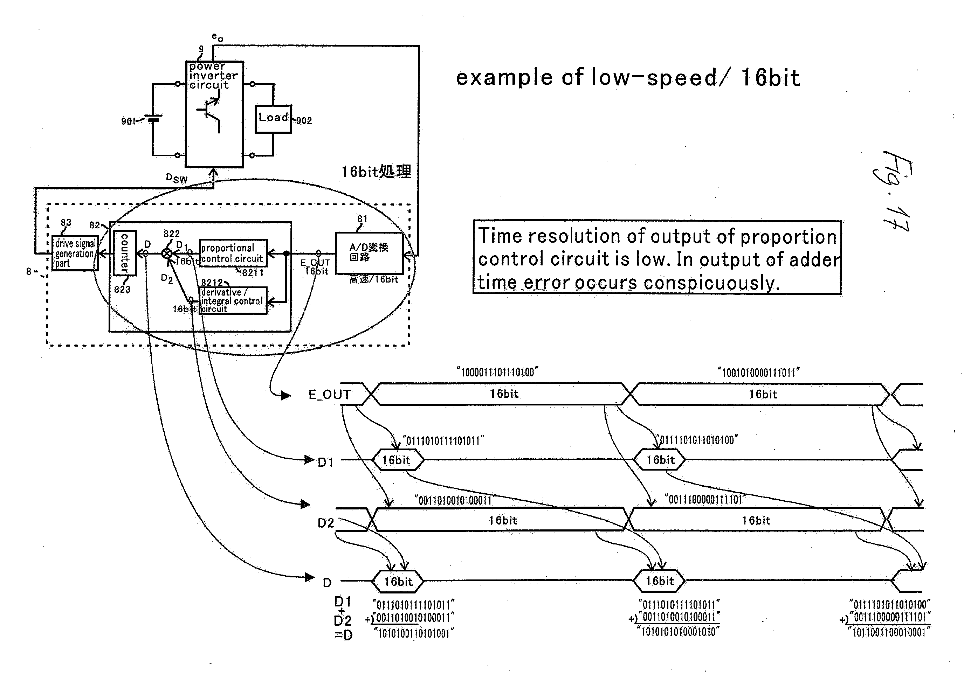

[FIG. 17] FIG. 17 is explanatory drawing of the control device of the conventional power inverter circuit.

### CONFIGURATION TO CARRY OUT INVENTION

FIG. 1 is an explanatory drawing showing one embodiment of the present invention. In control device 1A of FIG. 1, an example controlling output voltage eₒ of a power inverter circuit 2 is shown. This control is typically a constant voltage control. In FIG. 1, direct current power supply 201 and load 202 are connected to power inverter circuit 2. An electric switch for power conversion is driven by control device 1A.

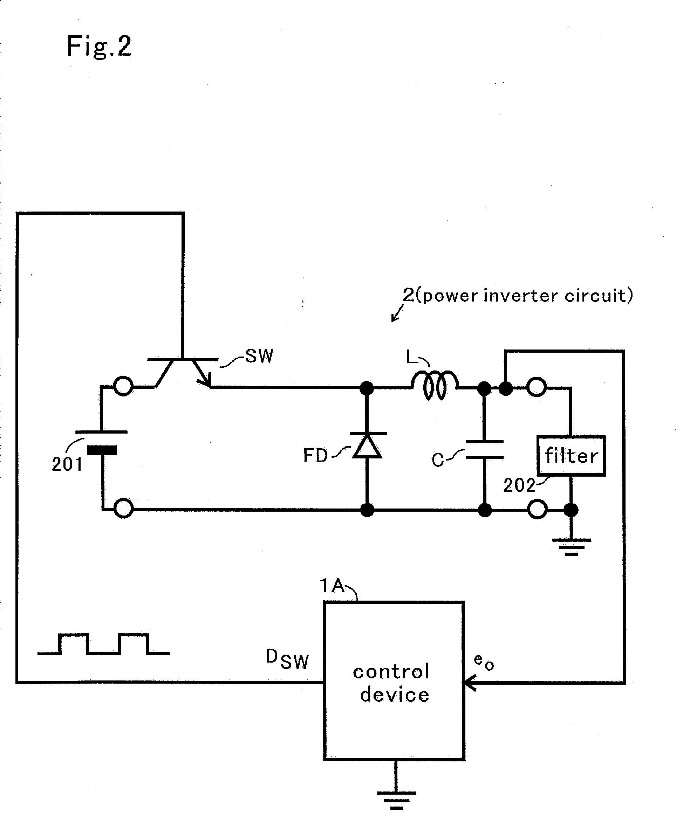

In this embodiment, as shown in a circuit diagram of FIG. 2, power inverter circuit 2 is comprised of electric switch SW for power conversion, flywheel diode FD, inductance L and capacitor C. DC power supply 201 is connected to an input side of power inverter circuit 2, and load 202 is connected to an output side of power inverter circuit 2, and output voltage eₒ is sent out to control device 1A, and control device 1A sends out ON/OFF control signal DSW that responded to output voltage eₒ to electric switch SW for power conversion.

Control device 1A is comprised of first control part 11A, second control part 12A, switch-off time data generation part 14, driving signal generation part 15 and operation management circuit 16A. Switch-off time data generation part 14 is a switch operating time data generation part of the present invention. Wherein, operation management circuit 16A manages the regulation of operation timeliness such as first control part 11A, second control part 12A, switch-off time data generation part 14, driving signal generation part 15. First control part 11A has first A/D converter 111, first operating circuit 112 and filter 113. First A/D converter 111 inputs output voltage eo of power inverter circuit 2 through filter 113 as a detection signal and performs A/D conversion. First operating circuit 112 inputs a digital signal from first A/D converter 111 and generates first arithmetic signal.

Second control part 12A has second A/D converter 121, second operating circuit 122 and filter 123. Second A/D converter 121 inputs output voltage eₒ of power inverter circuit 2 through filter 123 as a detection signal and performs A/D conversion. Second operating circuit 122 inputs a digital signal from second A/D converter 121 and generates second arithmetic signal.

In control device 1A of FIG. 1, first operating circuit 112 performs proportional control, and second operating circuit 122 performs integral control or derivative / integral control.

Switch-off time data generation part 14 synthesizes output signal D1 of first control part 11A and output signal D2 of second control part 12A, and generates switch operating time data D and sends this out to driving signal generation part 15. An output signal of first control part 11A is a result of an operation of first operating circuit 112. Signal D1 and output signal of second control part 12A are results of an operations of second operating circuit 122. Switch operating time data D is a signal meaning an electric switch operating time (in the present embodiment, it signals for off times). And driving signal generation part 15 sends out ON/OFF control signal Dsw to an electric switch for power conversion of power inverter circuit 2 and drives the electric switch.

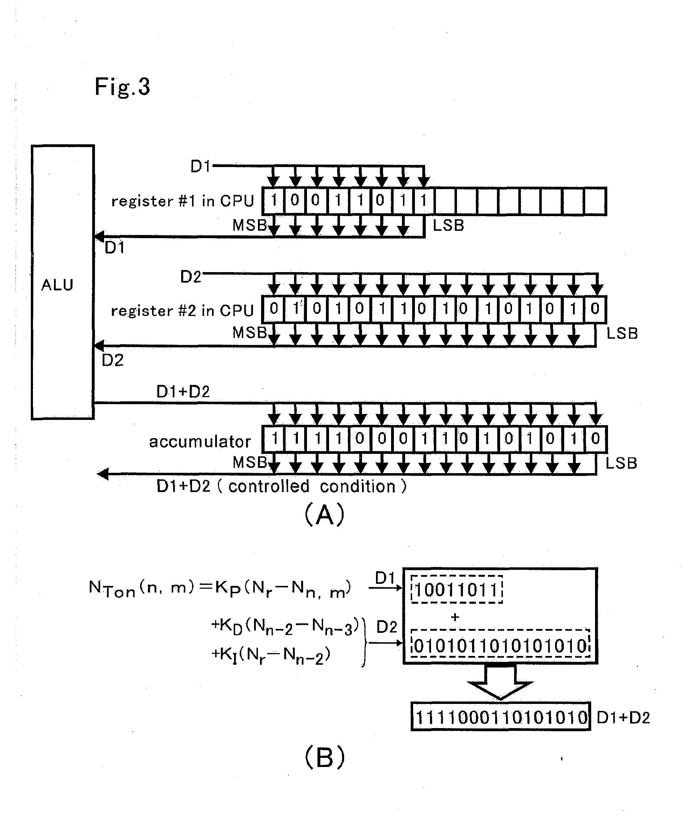

In FIG. 3 (A), D1 and D2 are added by a operating device (ALU). For example, in first operating circuit 112, proportional control element K_{P} (Nᵣₚ-N_{n,m}) is operated. In first operating circuit 212, differentiation element K_{D} (Nₙ₋₂-Nₙ₋₃) and integral element K_{I} (N_{rI}-Nₙ₋₂) are operated.
Wherein, K_{P}, K_{D}, K_{I} are constant.
Nᵣₚ, Nᵣₚ are constant for comparison. N_{n,m} is sampling value in sampling period of first A/D converter 111. The sampling period is short period. Nₙ₋₂, Nₙ₋₁ are sampling value in sampling period of second A/D converter 121. The sampling period is long period. In FIG. 3 (B) K_{P} (Nᵣₚ-N_{n,m}) is operated by 8 bit, and K_{D} (Nₙ₋₂-Nₙ₋₃)+K_{I} (N_{rI}-Nₙ₋₂) is operated in 16-bit.)

According to the present invention, first A/D converter 111 and second A/D converter 121 have following relations: a sampling rate of first A/D converter 111> a sampling rate of second A/D converter 121.

Also, first operating circuit 112 and second operating circuit 122 have, following relations.
unit operating time of first operating circuit 112 < unit operating time of second operating circuit 122
Unit operating time: Time required for each operating circuit generating one result of an operation.

Specifically, as for first A/D converter 111, circuit of high-speed / 8 bits is used in control device 1A of FIG. 1. And, as for second A/D converter 121, circuit of low-speed / 16 bits is used. For example, as for the circuit of low-speed /.16 bits, it can be manufactured in combination two A/D converters of the 8 bit.

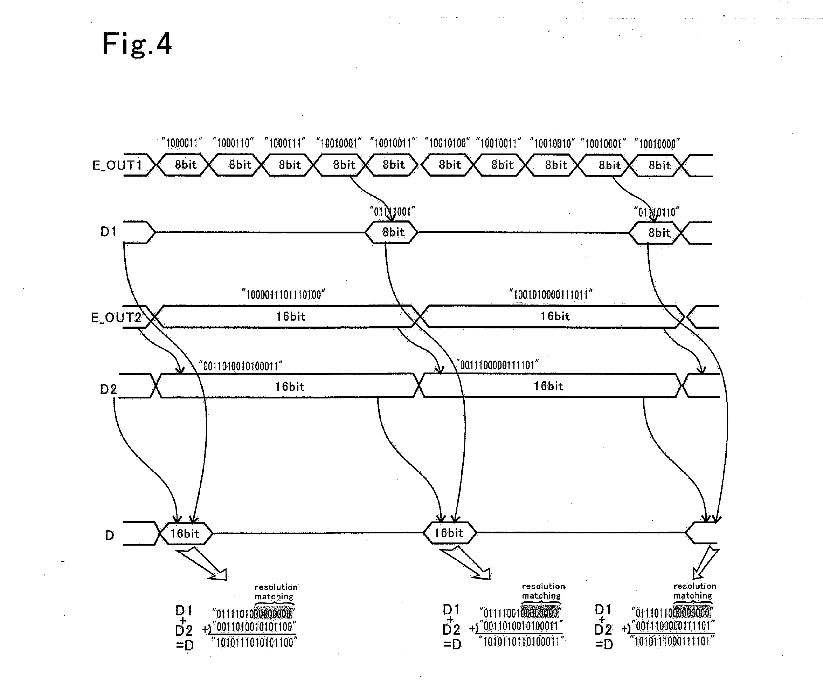

According to the present invention, as shown in FIG. 4, a calculation number of times of first operation circuit 112 per one ON/OFF period of the electric switch for power conversion may be the same as a calculation number of times of second operating circuit 122.

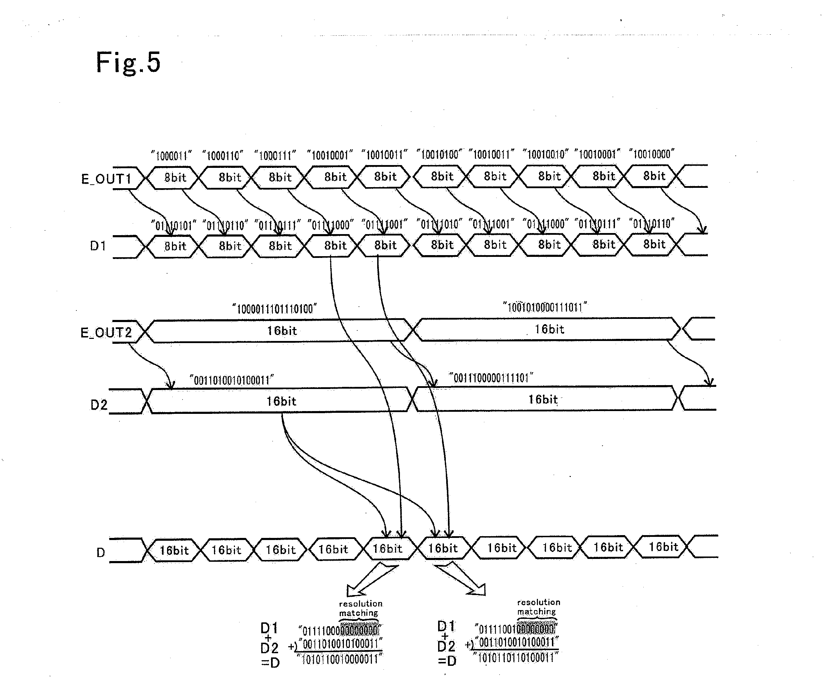

Also, as shown in FIG. 5, a calculation number of times of a first operation circuit 112 per one ON/OFF period of the electric switch for power conversion may exceed a calculation number of times of a second operating circuit 122. And in one ON/OFF period of the switch for power conversion, switch-off time data generation part 14 can update a computed result of first operation circuit 112. Switch-off time data generation part 14 can thereby generate off timeliness in a cycle when it is shorter than operating time of second operating circuit 122.

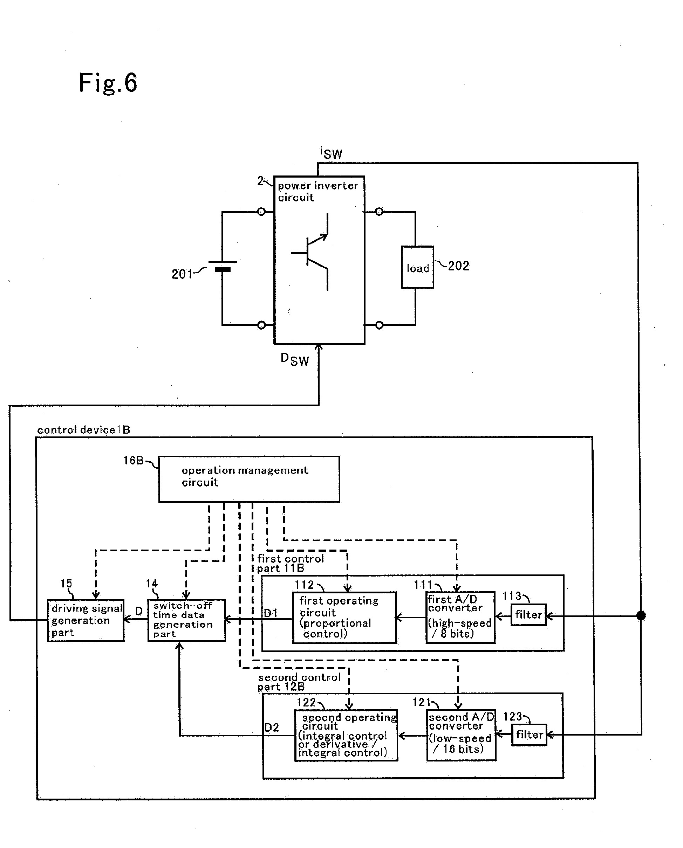

FIG. 6 is a figure showing the variations of the embodiments of FIG. 1. In FIG. 6, control device 1C is comprised of first control part 11C and second control part 12C, switch-off time data generation part 14, driving signal generation part 15 and operation management circuit 16C. First control part 11C is comprised of first A/D converter 111, first operation circuit 112, filter 113, and amplifier 115 which is provided between first A/D converter 111 and filter 113. A configuration of second control part 12C is the same as a configuration of second control part 12A of FIG. 1.

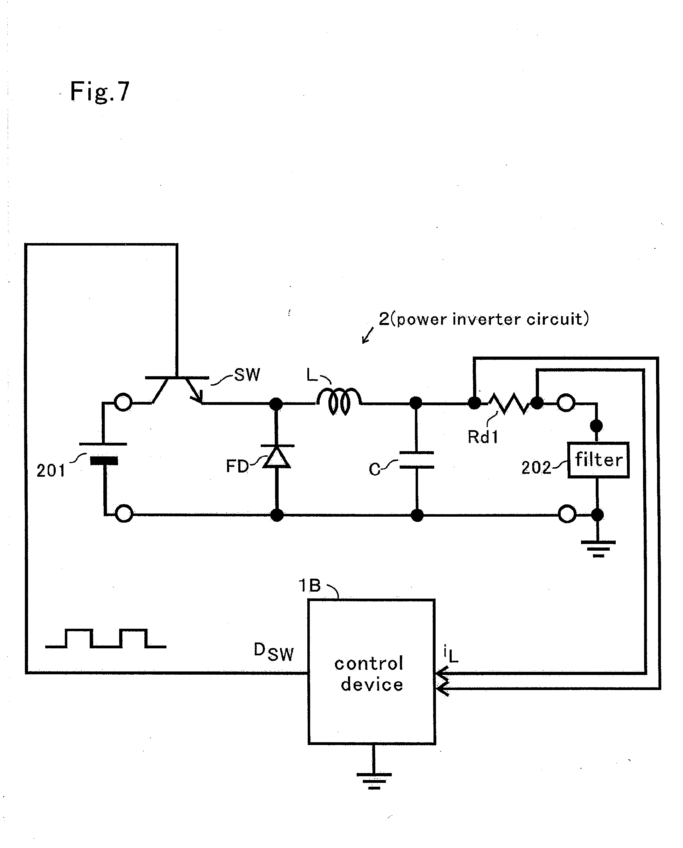

Amplifier 115 inputs output voltage eₒ of power inverter circuit 2 and it cuts and brings down the predetermined value width of the amplified detection level and can do A/D conversion by 8 bit. And amplifier 115 clips a predetermined width of the amplified detection level and can make A/D conversion by 8 bit. FIG. 7 (A) shows output voltage eₒ. FIG. 7 (B) shows a detection value amplified and clipped. First control part 11C can thereby perform a process with high resolution substantially. Though A/D converter (first A/D converter 111) of the 8 bit is used,

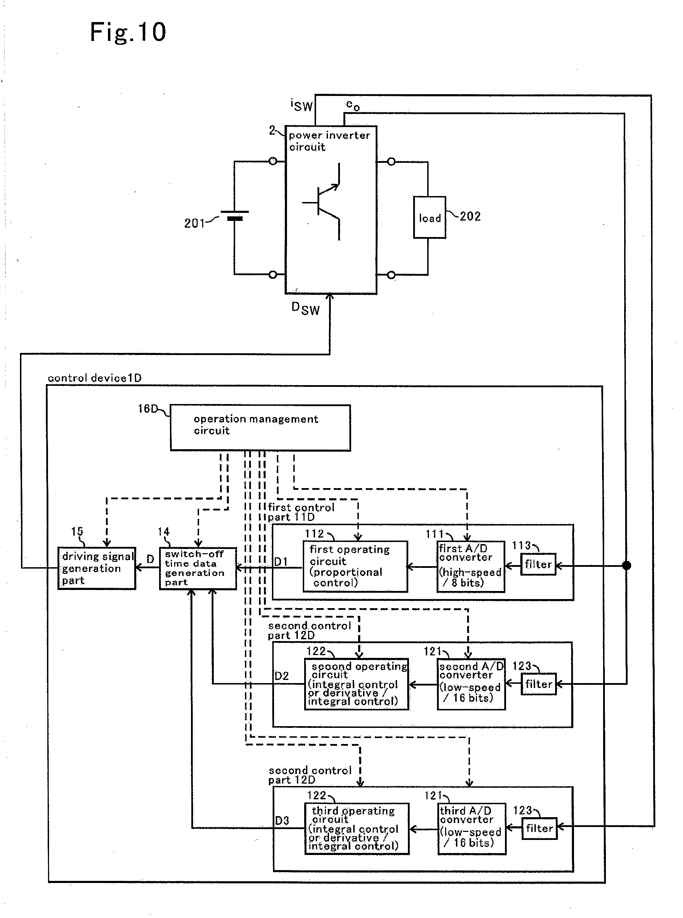

FIG. 10 is explanatory drawing showing the third embodiment of the present invention. In FIG. 10, control device 1D is comprised of first control part 11D, second control part 12D, third control part 13D, switch-off time data generation part 14, driving signal generation part 15 and operation management circuit 16D. A configuration of first control part 11D is the same as configuration of first control part 11A of FIG. 1. A configuration of second control part 12D is the same as configuration of first control part 12A of FIG. 1. Third control part 13D is comprised of third A/D converter 131, third operating circuit 132 and filter 133. Third operating circuit 132 inputs digital signal from third A/D converter 131 and generates third operating signal (output signal D3).

Actuating management circuit 16D manages operation of first control part 11D, second control part 12D and third control part 13D. In this embodiment, among first A/D converter 111, second A/D converter 121 and third A/D converter 131, next relations are concluded. [sampling rate of first A/D converter] > [sampling rate of second A/D converter] >=[sampling rate of third A/D converter]
or, [sampling rate of first A/D converter] > [sampling rate of third A/D converter] >=[sampling rate of second A/D converter] and [resolution of first A/D converter] <[resolution of second A/D converter] <= [resolution of third A/D converter]
or,
[resolution of first A/D converter] <[resolution of third A/D converter] <= [resolution of second A/D converter] Even more, among first operation circuit 112, second operating circuit 122 and third operating circuit 132, next relations are concluded.
[unit operating time of first operation circuit]< [unit operating time of second operation circuit]<= [unit operating time of third operation circuit] or, [unit operating time of first operation circuit]< [unit operating time of third operation circuit]<= [unit operating time of second operation circuit]

And switch-off time data generation part 14 synthesizes output signal D1, output signal D2, output signal D3 and generates output signal D meaning a off time data. Wherein, output signal D1 is first operating signal which first control part 11D generates, output signal D2 is second operating signal which second control part 12D generates, output signal D3 is third operating signal which third control part 13D generates, and output signal D is switch operating time data of switch SW for power conversion.

In this embodiment, as shown in a circuit diagram of FIG. 11, power inverter circuit 2 is comprised of switch SW for power conversion, commutation diode FD, inductance L and capacitor C. Direct current power supply 201 is connected to the input side of power inverter circuit 2, and load 202 is connected to the output side. And electric switch current isw and output voltage eₒ are sent out to control device 1. Wherein, detection of electric switch current isw is carried out by resistance rsw. In this embodiment, third control section 13 performs control based on switch current isw. Control device 1 can thereby perform control with a little influence of the voltage fluctuation of direct current power supply 201.

FIG. 13 is explanatory drawing showing the fourth embodiment of the present invention. In FIG. 13, second control part 12 includes second A/D converter 121 and third A/D converter 123. Second A/D converter 121 inputs output voltage eₒ and makes A/D conversion, and third A/D converter 123 inputs electric switch current isw and performs A/D conversion. Second control section 12 performs filter-arithmetic based on an output voltage eₒ and electric switch current isw.

In this embodiment, operation management circuit 16 manages the operation of first control part 11 and second control part 12. In this embodiment, among sampling rate of first A/D converter 111, sampling rate of third A/D converter 113 and sampling rate of second A/D converter 121, next relations are concluded. [sampling rate of first A/D converter 111] >=[sampling rate of third A/D converter 131] >[sampling rate of second A/D converter 121] Even more particularly, between unit operating time of first operating circuit 112 and the unit operating time of second operating circuit 122. [unit operating time of first operation circuit 112] <[unit operating time of second operating circuit 122]

First operation circuit 112 inputs a digital signal from first A/D converter 111. And first operation circuit 112 generates first operating signal (output signal D1). Also, second operating circuit 122 inputs a digital signal from second A/D converter 121 and third A/D converter 123. And second operating circuit 122 generates second operating signal (output signal D2).

And switch-off time data generation part 14 synthesizes output signal D1 and output signal D2, wherein output signal D1 is first operating signal which first control part 11 outputs, and output signal D2 is second operating signal which second control part 12 outputs. Switch-off time data generation part 14 generates output signal D, wherein output signal D is data for off times of switch SW for power conversion. In this embodiment, second operating circuit 122 of second control section 12 performs control by filter-arithmetic, and stable control is thereby performed.

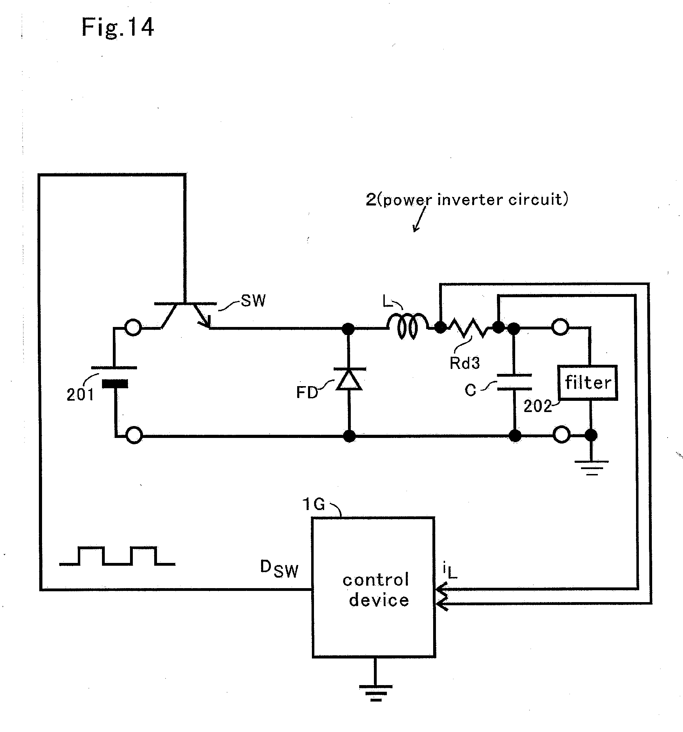

FIG. 14 is a figure showing variations of the fourth embodiment of FIG. 13. In FIG. 14, first control part 11 is comprised of first A/D converter 111, first operation circuit 112, filter 113 and amplifier 115 provided just before first A/D converter 111.

Amplifier 115 inputs output voltage eₒ of power inverter circuit 2 and it cuts and brings down the predetermined value width of the amplified detection level and can do A/D conversion. And amplifier 115 pulls out the predetermined width of a detection value that it amplified and can carry out A/D conversion. Resolution of first A/D converter 111 can be higher substantially, and highly precise control is thereby carried out. Even more particularly, by second operating circuit 122 (filter circuit), control of high stability is carried out.

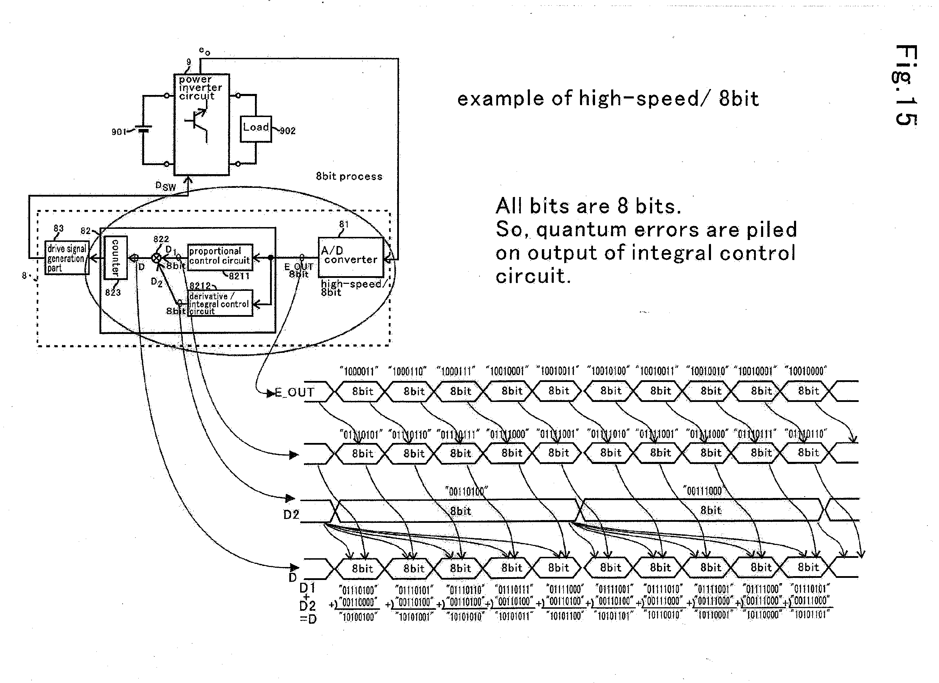

FIG. 15 is explanatory drawing showing fifth embodiment of the present invention. In FIG. 15, control device 1 comprises first control part 11, second control section 12 and third control part 13. Third control section 13 has third A/D converter 131 and third operating circuit 132. Third A/D converter 131 inputs switch current isw and performs A/D conversion. Third operating circuit 132 inputs a digital signal from third A/D converter 131 and generates the third operating signal (output signal D3).

Actuating management circuit 16 manages operation of first control part 11, second control section 12 and third control part 13. In this embodiment, among sampling rate of first A/D converter 111, sampling rate of third A/D converter 113 and sampling rate of second A/D converter 121, the next relations are concluded. [sampling rate of first A/D converter 111] >[sampling rate of third A/D converter 113] >=[sampling rate of second A/D converter 121] Even more particularly, among unit operating time of first operation circuit 112, unit operating time of first operation circuit 132, unit operating time of first operation circuit 122, the next relations are concluded. [unit computing speed of first operation circuit 112] <[unit computing speed of third operating circuit 132] <=[unit computing speed of second operating circuit 122]

And switch-off time data generation part 14 synthesizes output signal D1, output signal D2, output signal D3. Wherein, output signal D1 is the first operating signal which first control part 11 generates, output signal D2 is the second operating signal which second control section 12 generates, output signal D3 is the third operating signal which third control section 13 generates. And switch-off time data generation part 14 generates output signal D, and output signal D is data for an off time of a power conversion switch SW. For example, power inverter circuit 2 is circuit shown in third embodiment (cf. FIG. 11).

In the control, there is thereby little influence of the voltage fluctuation of direct current power supply 201. In the embodiment, the control device detected output voltage eo and controlled.
Alternatively, the control device further detected electric switch current iSW and controlled. According to the present invention, the control device detects an output current io, an input voltage ei, an input current ii and/or electric reactor current iL of power inverter circuit 2, and the control device can control. Also, in the embodiment, the ON/OFF control signal (the signal which means switch operating time) was off time signal. However, the present invention is not limited as above. When a signal meaning switch operating time is ON time signal, the present invention is applied. When signals meaning switch operating time are ON time signal and OFF time signal, the present invention is applied too.

Power inverter circuit is often operated conventionally by analog control unit. With analog control circuit, operating characteristic depends on characteristic of configuration element. Thus, there are accuracy of component properties, heterogeneity of the quality, limitation of the operating range due to device characteristic, others, various kinds of disadvantages. The development of the digital controller is expected to cancel this disadvantage. When it is going to manufacture an electric power supply working with a digital controller, for example, A/D converter of the high-speed 16-bit is necessary. Market requires the digital controller of price same as analog control unit. In case of analog control circuit, it must adopt a large-capacity capacitor as an output capacitor of power inverter circuits. Control circuit of the present invention is implemented in digital circuit. Thus, control circuit is downsized in comparison with analog control circuit, even more particularly production cost goes low

- 1: control device
- 2: power inverter circuits
- 11: first control parts
- 12: second control parts
- 13: third control parts
- 14: switch-off time data generation part
- 15: driving signal generation part
- 16: operation management circuit
- 111: first A/D converter
- 112: first operation circuit
- 113,123,131: third A/D converter
- 115, 1151, 1152: amplifier
- 121: second A/D converter
- 122: second operating circuit
- 132: third operating circuit
- 201: DC power supply
- 202: load
- C: capacitor
- D, D1, D2, D3: output signal
- E: digital voltage value
- FD: flywheel diode
- L: inductance
- SW: power conversion switch
- eᵢ: input voltage
- eₒ: output voltage
- i_{L}: electric reactor current
- isw: electric switch current
- iᵢ: input current
- iₒ: output current

## Claims

1. A control device of power inverter circuit which generates switch operating time data based on at least one detecting signal among output voltage, output current, input voltage, input current, electric switch current and electric reactor current, and generates ON/OFF control signal for power conversion switch based on the switch operating time data, comprising:
first control part including
first operation circuit which includes
first A/D converter that inputs the detecting signal and performs A/D conversion and
first operation circuit that generates first operation signal by inputting digital signal from the first A/D converter,
second operation circuit which includes
second A/D converter that inputs the detecting signal and performs A/D conversion and
second operation circuit that generates second operation signal by inputting digital signal from the first A/D converter,
switch operating time data generation part which generates the switch operating time data,
operation management circuit which manages first control section, second control section and switch operating time data generation part,
wherein
(a) the first A/D converter and the second A/D converter have next relations,
[sampling rate of the first A/D converter] > [sampling rate of the second A/D converter], [resolution of the first A/D converter] < [resolution of the second A/D converter],
(b) the first operation circuit and the second operating circuit have next relations,
[unit operating time of the first operation circuit] < [unit operating time of the second operation circuit]
unit operating time: time required for each operating circuit generating one result of an operation
(c) the first operation circuit inputs a digital signal from the first A/D converter and generates first operating signal, the second operating circuit inputs a digital signal from the second A/D converter and generates second operating signal, the switch operating time data generation part synthesizes the first operating signal and the second operating signal and generates the switch operating time data of the switch for power conversion.

2. The control device of the power inverter circuit according to claim 1, even more particularly, the control device has
third A/D converter which inputs a detecting signal same as the detecting signal or a detecting signal not same as the detecting signal,
third control part which includes third operating circuit that inputs signal from the third A/D converter and generates third operation signal, wherein
(a) the actuating management circuit manages operations of the first control section, the second control section and the first control section,
(b) the first A/D converter, the second A/D converter and the third A/D converter have next relations, [sampling rate of the first A/D converter] > [sampling rate of the second A/D converter] >= [sampling rate of the third A/D converter],
or,
[sampling rate of the first A/D converter] > [sampling rate of the third A/D converter] >= [sampling rate of the second A/D converter],
and,
[resolution of the first A/D converter]< [resolution of the second A/D converter]<= [resolution of the third A/D converter],
or,
[resolution of the first A/D converter]< [resolution of the third A/D converter]<= [resolution of the second A/D converter],
(c) the first operation circuit inputs digital signal from the first A/D converter and generates the first operating signal,
(d) the second operating circuit inputs digital signal from the second A/D converter and generates the second operating signal,
(e) the third operating circuit inputs digital signal from the third A/D converter and generates the third operating signal,
(f) the first operation circuit, the second operating circuit and the third operating circuit have next relations, [unit operating time of the first operation circuit] < [unit operating time of the second operation circuit] <= [unit operating time of the third operation circuit],
or,
[unit operating time of the first operation circuit] < [unit operating time of the third operation circuit] <= [unit operating time of the second operation circuit],
(g) the switch operating time data generation part synthesizes the first operating signal and the second operating signal and the third operating signal and generates above switch operating time data of the switch for power conversion.

3. The control device of the power inverter circuit according to claim 1-2, wherein just before the first A/D converter, the second A/D converter and the third A/D converter, a filter is comprised.

4. The control device of the power inverter circuit according to claim 1-3, wherein just before the first A/D converter, the second A/D converter and the third A/D converter an amplifier is comprises respectively, the amplifier clips predetermined range width and amplifies.

5. The control device of the power inverter circuit according to claim 1-4, wherein calculation number of times of the first operation circuit by one ON/OFF period of the switch for power conversion is more than the calculation number of times of the second operating circuit.

6. The control device of the power inverter circuit according to claim 1-4, wherein calculation number of times of the first operation circuit by one ON/OFF period of the switch for power conversion is more than the calculation number of times of the second operating circuit, and calculation result of the first operation circuit is updated at least one time in one ON/OFF period of the switch for power conversion.
